# EUROPÄISCHE PATENTSCHRIFT

(11) **EP 2 538 040 B1**
(45) Veröffentlichungstag und Bekanntmachung des Hinweises auf die Patenterteilung: **05.10.2016**
(21) Anmeldenummer: 11005101.8
(22) Anmeldetag: 22.06.2011
(51) Int. Cl.: F01K 17/02, F25B 13/00, F24D 15/00, F01K 13/02, F24D 3/18, F24D 12/02

(54) **Kraft-Wärme-Kopplungs-Anlage und assoziiertes Verfahren**
Combined heat and power device and associated method
Installation de combinaison chaleur-électricité et procédé associé

(43) Veröffentlichungstag der Anmeldung: 26.12.2012
(73) Patentinhaber: Orcan Energy AG, 81379 München (DE)
(72) Erfinder: Aumann, Richard, 80796 München (DE); Schuster, Andreas, 86874 Tussenhausen (DE); Sichert, Andreas, 81379 München (DE)
(74) Vertreter: Grünecker Patent- und Rechtsanwälte PartG mbB

(56) Entgegenhaltungen:
- DE-A1- 2 937 025
- DE-A1- 10 345 580
- US-A- 4 733 536
- US-A- 5 121 607

## Beschreibung

### Gebiet der Erfindung

Die vorliegende Erfindung betrifft Kraft-Wärme-Kopplungs-Anlagen und insbesondere den Betrieb einer Kraft-Wärme-Kopplungs-Anlage ohne die Notwendigkeit für einen Spitzenlastkessel.

### Stand der Technik

Bei Kraft-Wärme-Kopplungs(KWK)-Anlagen erfolgt neben der Stromgewinnung aus Brennstoffen die Auskopplung nutzbarer Wärme für Heizzwecke. KWK-Anlagen stellen Wärme für die Beheizung öffentlicher und privater Gebäude zur Verfügung. KWK-Anlagen kommen je nach Dimensionierung insbesondere für den Einsatz in Einfamilienhäusern, Wohngebäuden und Gewerbebetrieben in Frage. Da KWK-Anlagen neben der Stromgewinnung auch Wärme zu Heizzwecken abgeben, erreichen sie verglichen mit Dampfkraftwerken, die zur reinen Stromgewinnung verwendet werden, höhere Nutzungsgrade.

In der DE 103 45 580 A1 wird eine Vorrichtung zur Erzeugung von Wärme und Strom mittels eines Dampfkreisprozesses mit externer Verbrennung beschrieben, die einen Brenner zur Erzeugung eines emissionsarmen heißen Rauchgases, einen Dampferzeuger zur Übertragung von Wärme aus dem heißen Rauchgas aufein Arbeitsmittel, eine Hochdruckpumpe zum Umpumpen des Arbeitsmittels innerhalb des Dampfkreisprozesses; eine Expansionsmaschine zur Entspannung des Arbeitsmittels unter Abgabe von Arbeit, einen Generator zur Erzeugung von elektrischem Strom und einen Kondensator zur Kondensation des entspannten Arbeitsmittels umfasst.

In der US 5 121 607 A wird ein Energierückgewinnungssystem für ein motorisiertes Fahrzeug beschrieben, das einen Wärmetauscher, einen Kondensator und einen Kompressor/Expander 16 aufweist. Ein Arbeitsmediumkreislauf erstreckt sich über eine Zirkulationspumpe, einen Boilertank, den Wärmetauscher und den Kompressor/Expander.

In der US 4 733 536 A wird eine Kraft-Wärmekopplungsanlage mit einer als Kompressor oder Expander betreibbaren Vorrichtung beschrieben.

Die von einem Gebäude zur hinreichenden Heizung erforderliche Heizleistung hängt stark von den Außentemperaturen ab. Um sicherzustellen, dass das Gebäude auch bei kalter Witterung ausreichend mit Heizwärme versorgt wird, wird die KWK-Anlage auf die sogenannte Normauslegungstemperatur ausgelegt, die relativ niedrig ist, und nur sehr selten innerhalb eines Jahres überhaupt erreicht wird. Um eine KWK-Anlage in einem wirtschaftlich sinnvollen Maße zur Heizung von Gebäuden verwenden zu können, wird sie typischer Weise in praxi nur auf einen Bruchteil der gemäß der Normauslegungstemperatur notwendigen maximalen Heizleistung ausgelegt, und es wird die maximale Heizleistung, wenn sie aktuell erforderlich wird, über einen Spitzenlastkessel bereitgestellt. Hierdurch wird jedoch der Aufbau der Heizanlage kompliziert, und es fallen höhere Investitionskosten aufgrund der Notwendigkeit für den Spitzenlastkessel an. Es liegt somit der vorliegenden Erfindung eine Aufgabe dahingehend zugrunde, eine KWK-Anlage bereitzustellen, bei der eine gegenüber dem Normalbetrieb hinreichend große Erhöhung der Heizleistung zur zuverlässigen Beheizung von Gebäuden bei tiefen Außentemperaturen ermöglicht wird, ohne dass ein Spitzenlastkessel nötig wäre.

### Beschreibung der Erfindung

Die oben genannte Aufgabe wird durch das Verfahren zum Betreiben einer Kraft-Wärme-Kopplungs (KWK) - Anlage, die einen Heizkessel, einen Verdampfer, eine Expansionsmaschine, die dazu ausgebildet ist, ein verdampftes Arbeitsmedium zu expandieren oder zu komprimieren, und einen Kondensator umfasst, gemäß Anspruch 1 gelöst. Das Verfahren umfasst alle Schritte des unabhängigen Anspruchs 1. Die folgenden Schritte sind Teil des Verfahrens:
a) wenn eine erste Bedingung erfüllt ist: Zuführen eines Arbeitsmediums zu dem Verdampfer, um ein zumindest teilweise verdampftes Arbeitsmedium zu erhalten, Zuführen des verdampften Arbeitsmediums zu der Expansionsmaschine und Betreiben der Expansionsmaschine derart, dass das Arbeitsmedium expandiert wird, Zuführen des durch die Expansionsmaschine expandierten Arbeitsmediums zu dem Kondensator und Übertragen von Wärme des dem Kondensator zugeführten expandierten Arbeitsmediums auf ein Medium eines Heizkreislaufes, der zum Beheizen eines Objekts ausgebildet ist; und
b) wenn eine zweite Bedingung, die von der ersten Bedingung verschieden ist, erfüllt ist: i) Zuführen zumindest eines Teiles eines Arbeitsmediums zu dem Kondensator der KWK - Anlage, ohne dass der Teil des Arbeitsmediums der Expansionsmaschine zugeführt wurde, und Übertragen von Wärme des dem Kondensator zugeführten Arbeitsmediums auf ein Medium eines Heizkreislaufes, der zum Beheizen eines Objekts ausgebildet ist, und/oder ii) Zuführen eines von dem Heizkessel zu dem Verdampfer zugeführten Mediums zu einer Wärmeübertragungseinrichtung, in der Wärme von diesem Medium auf ein Medium eines Heizkreislaufes (Heizmedium), der zum Beheizen eines Objekts ausgebildet ist, übertragen wird.

Es versteht sich, dass gemäß b) ii) das Medium, das von dem Heizkessel dem Verdampfer zugeführt wird, insbesondere nach Passieren des Verdampfers der Wärmeübertragungseinrichtung zum Übertragen von Wärme an das Heizmedium zugeführt wird. Ebenso versteht es sich, dass außerhalb des Erfindungsgegenstandes gemäß der Alternative b) ii) das Heizmedium prinzipiell direkt zum Beheizen des Gebäudes oder innerhalb des Erfindungsgegenstandes gemäß der Alternative b) ii) zum Beheizen eines weiteren, eine Anzahl an Heizflächen in dem zu beheizenden Gebäude durchfließenden, Mediums Verwendung finden kann.

Gemäß dem erfindungsgemäßen Verfahren kann also die KWK-Anlage zumindest in zwei verschiedenen Modi gefahren werden. Entweder sie wird wie eine herkömmliche KWK-Anlage betrieben, so dass ein Teil der, beispielsweise durch Verbrennen eines Brennstoffes erhaltenen, zum Erhitzen des Arbeitsmediums bereitgestellten Energie über die Expansionsmaschine einem Generator zum Erzeugen von Strom zugeführt wird und das expandierte Arbeitsmedium zu Heizzwecken genutzt wird. Oder sie wird derart verwendet, dass eben nicht das gesamte erhitzte (verdampfte) Arbeitsmedium der Expansionsmaschine zugeführt wird, sondern zumindest ein Teil desselben an der Expansionsmaschine vorbei geführt wird, so dass es direkt zu Heizzwecken verwendet werden kann. Dieses kann durch eine Bypass-Leitung mit einem Bypass-Ventil erreicht werden. Ebenso kann das Medium, das zum Verdampfen des Arbeitsmediums in dem Verdampfer vorgesehen ist, einen Teil seiner Wärme an das Heizmedium abgeben oder mit dem Heizmedium identisch sein. Wenn ein gegenüber dem normalen Bedarf erhöhter Bedarf an Heizleistung auftritt, wird der Betrieb also von a) nach b) wechseln. Ein erhöhter Bedarf kann insbesondere dadurch auftreten, dass die Außentemperatur eines durch die KWK-Anlage zu beheizenden Gebäudes unter einen vorbestimmten Wert fällt.

Die oben genannte erste und zweite Bedingung kann also durch das Fallen der Außentemperatur eines durch die KWK-Anlage zu beheizenden Gebäudes unter einen jeweils vorbestimmten Wert gegeben sein. Prinzipiell deckt die KWK-Anlage einen Wärmebedarf, der mit der Außentemperatur des zu beheizenden Gebäudes korreliert. Die erste Bedingung kann durch Unterschreiten einer bestimmten Heizleistung, beispielsweise hervorgerufen durch das Überschreiten einer ersten Außentemperaturschwelle, gegeben sein, wobei die Heizleistung größer als eine für die Anlage typische Minimalleistung ist. Die Minimalleistung korreliert hierbei mit einer Einschaltschwelle, ab der die Anlage überhaupt in Betrieb geht.

Durch das Umstellen von a) nach b) kann also eine erhöhte Heizleistung erzielt werden, ohne dass dafür ein Spitzenlastkessel vorgesehen sein müsste. Der erste Modus a) wird auch als KWK-Betriebsmodus und der zweite Modus b) wird auch als Heizbetriebs-Modus bezeichnet.

Die KWK-Anlage kann hierbei insbesondere eine Organic Rankine Cycle (ORC) - Anlage sein. ORC-Anlagen stellen eine Realisierung des Clausius-Rankine-Kreisprozesses dar, in dem beispielsweise prinzipiell über adiabatische und isobare Zustandsänderungen eines organischen Arbeitsmediums elektrische Energie gewonnen wird. Über Verdampfung, Expansion und anschließende Kondensation des Arbeitsmediums wird hierbei mechanische Energie gewonnen und in elektrische Energie gewandelt. Prinzipiell wird das Arbeitsmedium durch eine Speisepumpe auf Betriebsdruck gebracht, und es wird ihm in einem Wärmeübertrager Energie in Form von Wärme, die durch eine Verbrennung oder einen Abwärmestrom zur Verfügung gestellt wird, zugeführt. Vom Verdampfer aus strömt das Arbeitsmedium über ein Druckrohr zu einer ORC-Turbine, wo es auf einen niedrigeren Druck entspannt wird. Im Anschluss strömt der entspannte Arbeitsmediumsdampf durch einen Kondensator, in dem ein Wärmeaustausch zwischen dem dampfförmigen Arbeitsmedium und einem Kühlmedium stattfindet, wonach das auskondensierte Arbeitsmedium durch eine Speisepumpe zu dem Verdampfer in einem Kreisprozess zurückgeführt wird (s. auch die detaillierte Beschreibung unten).

Gemäß einer Weiterbildung kann die KWK-Anlage noch in einem dritten Modus c) betrieben werden. Wenn eine dritte Bedingung, die von der ersten und von der zweiten Bedingung verschieden ist, erfüllt ist, erfolgt das Zuführen eines Arbeitsmediums zu der Expansionsmaschine und Betreiben der Expansionsmaschine derart, dass das Arbeitsmedium komprimiert wird, das Zuführen des durch die Expansionsmaschine komprimierten Arbeitsmediums zu dem Kondensator und das Übertragen von Wärme des dem Kondensator zugeführten komprimierten Arbeitsmediums auf ein Medium eines Heizkreislaufes, der zum Beheizen eines Objekts ausgebildet ist. In diesem dritten Modus arbeitet die KWK-Anlage somit als Wärmepumpe.

Der Begriff der Expansionsmaschine ist hier also weiter zu fassen, als es allgemein üblich ist. In den Modi a) und b) expandiert die Expansionsmaschine tatsächlich das erhitzte (verdampfte) Arbeitsmedium. Im Modus c), dem Wärmepumpen-Modus, komprimiert sie jedoch das Arbeitsmedium. Hierzu ist es notwendig, dass die Drehrichtung der Expansionsmaschine gegenüber dem KWK-Modus umgekehrt werden kann. Dieser Betriebsmodus ermöglicht eine gegenüber dem Modus b) weitere Erhöhung der Heizleistung. Beispielsweise kann die KWK-Anlage von dem Modus a) in den Modus b) geschaltet werden, wenn die Außentemperatur eines durch die KWK-Anlage zu beheizenden Gebäudes unter einen vorbestimmten ersten Wert fällt, und sie kann von dem Modus b) in dem Modus c) geschaltet werden, wenn hernach die Außentemperatur des durch die KWK-Anlage zu beheizenden Gebäudes unter einen vorbestimmten zweiten Wert fällt, der niedriger als der vorbestimmte erste Wert ist.

Die KWK-Anlage kann gemäß obiger Beispiele somit insbesondere drei Kreisläufe umfassen. Einer dieser Kreisläufe kann durch ORC gebildet werden, in dem das organische Arbeitsmedium von einer Pumpe dem Verdampfer zugeführt wird, in dem es zumindest teilweise verdampft wird und von dem das verdampfte Arbeitsmedium der Expansionsmaschine zugeführt wird, durch die es expandiert (in den Modi a) und b)) wird. Von der Expansionsmaschine wird der expandierte Arbeitsmediumsdampf dem Kondensator zur Kondensation zugeführt.

In dem zweiten Kreislauf zirkuliert das Medium, das von dem Heizkessel durch den Verdampfer geleitet wird. Dieses Medium, beispielsweise Wasser, wird im Heizkessel erhitzt und von diesem dem Verdampfer zugeführt. In dem Verdampfer wird mit seiner Wärme das Arbeitsmedium verdampft. Aus dem Verdampfer wird es dem Heizkessel, beispielsweise mithilfe einer Speisepumpe, wieder zugeführt. Bevor es dem Heizkessel wieder zugeführt wird, kann es jedoch durch eine Wärmeübertragungseinrichtung (Nacherwärmeinrichtung) geleitet werden, in der es das Medium des dritten Kreislaufes erwärmt.

In dem dritten Kreislauf zirkuliert das Heizmedium, beispielsweise Wasser, das, ggf. durch Wärmeübertragung an ein weiteres Medium, welches Heizflächen durchströmt, zum Beheizen eines Gebäudes verwendet wird. Es kann sich hierbei um einen Niedertemperatur-Kreislauf im Gegensatz zu einem Heißwasser-Zwischenkreis des ersten Kreislaufes handeln. Das Heizmedium kann mithilfe des Kondensators, in dem das Arbeitsmedium unter Wärmeabgabe kondensiert wird, erwärmt werden. Zusätzlich oder alternativ kann das Heizmedium in der genannten Nacherwärmeinrichtung erwärmt werden, in der Wärme von dem in dem Heizkessel erhitzten und durch den Verdampfer geleiteten Medium auf das Heizmedium übertragen werden kann. In dem Kondensator und/oder der Nacherwärmeinrichtung kann das Heizmedium von ungefähr 30 °C auf ungefähr 45 °C erwärmt werden.

Das Medium, das von dem Heizkessel dem Verdampfer zugeführt wird, um das Arbeitsmedium zumindest teilweise zu verdampfen, kann, bevor es, gegebenenfalls nach Durchlaufen des Vorwärmers, dem Heizkessel wieder zugeführt wird, durch einen Economizer (Wärmeübertrager) geführt werden, in dem auf das Medium Wärme eines zum Erhitzen des Heizkessels verwendeten Brennstoffs bzw. des Rauchgases übertragen wird. Die KWK-Anlage kann mit jedem herkömmlichen Brennstoff, wie beispielsweise Kohle, Gas oder Holz, betrieben werden. Das beim Verbrennen des Brennstoffs entstehende Rauchgas wird zum Erhitzen des dem Heizkessel in dem zweiten Kreislauf zugeführten Mediums verwendet. Das Rauchgas kann durch einen Kamin entsorgt werden. Bevor es dem Kamin zugeführt wird, kann es jedoch in dem genannten Beispiel durch den Economizer geführt werden. Dieser ist eine Einrichtung, in der Wärme von dem Rauchgas auf das Medium, das dem Heizkessel zugeführt wird, übertragen wird. Er dient also als Wärmeübertrager zum Vorwärmen des Mediums, das im Heizkessel erhitzt wird und schließlich in dem Verdampfer zum Verdampfen des Arbeitsmediums dient.

Gemäß einer weiteren Weiterbildung wird in Modus c), dem Wärmepumpen-Modus, das Arbeitsmedium nicht durch den Verdampfer geleitet. In diesem Modus wird das Arbeitsmedium ja nicht in der Expansionsmaschine zum Antreiben eines Generators expandiert, und muss somit nicht zuvor verdampft werden. Es kann durch eine durch ein entsprechendes Ventil geregelte Bypass-Leitung an dem Verdampfer vorbei direkt der Expansionsmaschine zugeführt werden.

Die oben genannte Aufgabe wird auch durch Bereitstellen einer Kraft-Wärme-Kopplungs (KWK) - Anlage gemäß unabhängigem Anspruch 10 gelöst, die umfasst
einen Verdampfer, der dazu ausgebildet ist, ein Arbeitsmedium zu verdampfen;
eine Expansionsmaschine, die dazu ausgebildet ist, das verdampfte Arbeitsmedium zu expandieren oder zu komprimieren;
einen Kondensator, der dazu ausgebildet ist, das expandierte oder komprimierte Arbeitsmedium zu kondensieren; und
eine erste Bypass-Leitung mit einem ersten Ventil, die dazu ausgebildet ist, über das erste Ventil zumindest einen Teil des von dem Verdampfer gelieferten verdampften Arbeitsmediums an der Expansionsmaschine vorbei zu dem Kondensator zu leiten.

Durch die erste Bypass-Leitung wird es ermöglicht, dass zumindest ein Teil des Arbeitsmedium, ohne dass es expandiert würde, entsprechend dem oben genannten Heizbetriebs-Modus dem Kondensator zur Übertragung von Wärme auf das zur Heizung eines Gebäudes verwendete Medium (Heizmedium) des oben genannten dritten Kreislaufes zugeführt wird. Die KWK-Anlage kann eine ORC-Anlage sein, die einen Organic Rankine Cycle für das organische Arbeitsmedium umfasst.

Die KWK-Anlage umfasst weiterhin eine Anzahl an Ventilen und eine Steuerungseinrichtung, wobei sie dazu ausgebildet ist,
a) wenn eine erste Bedingung erfüllt ist, die Anzahl an Ventilen derart zu steuern, dass das Arbeitsmedium dem Verdampfer zugeführt wird, um ein zumindest teilweise verdampftes Arbeitsmedium zu erhalten, das verdampfte Arbeitsmedium der Expansionsmaschine zuzuführen derart, dass das Arbeitsmedium expandiert wird, und das durch die Expansionsmaschine expandierte verdampfte Arbeitsmedium dem Kondensator zuzuführen, so dass Wärme des dem Kondensator zugeführten expandierten Arbeitsmediums auf ein Medium eines Heizkreislaufes, der zum Beheizen eines Objekts ausgebildet ist, übertragen wird; und
b) wenn eine zweite Bedingung, die von der ersten Bedingung verschieden ist, erfüllt ist, die Anzahl an Ventilen derart zu steuern, dass zumindest ein Teil eines Arbeitsmediums zu dem Kondensator der KWK - Anlage, ohne dass der Teil des Arbeitsmediums der Expansionsmaschine zugeführt wurde, zugeführt wird und Wärme des dem Kondensator zugeführten Arbeitsmediums auf ein Medium eines Heizkreislaufes, der zum Beheizen eines Objekts ausgebildet ist, übertragen wird und/oder ii) ein von dem Heizkessel zu dem Verdampfer zugeführtes Medium einer Wärmeübertragungseinrichtung zugeführt wird, so dass Wärme von diesem Medium auf ein Medium eines Heizkreislaufes (Heizmedium), der zum Beheizen eines Objekts ausgebildet ist, übertragen wird.

Die Steuerungseinrichtung kann weiterhin dazu ausgebildet sein, wenn eine dritte Bedingung, die von der ersten und von der zweiten Bedingung verschieden ist, erfüllt ist,
die Anzahl an Ventilen derart zu steuern, dass ein Arbeitsmedium der Expansionsmaschine zugeführt wird,
die Expansionsmaschine derart zu betreiben, dass das Arbeitsmedium komprimiert wird, und
das durch die Expansionsmaschine komprimierte Arbeitsmedium dem Kondensator zuzuführen, so dass Wärme des dem Kondensator zugeführten komprimierten Arbeitsmediums auf ein Medium eines Heizkreislaufes, der zum Beheizen eines Objekts ausgebildet ist, übertragen wird.

Die Bedingungen können, wie es oben hinsichtlich des erfindungsgemäßen Verfahrens beschrieben ist, in dem Unterschreiten entsprechender Temperaturwerte außerhalb eines von KWK-Anlage zu beheizenden Gebäudes bestehen.

Gemäß einer Weiterbildung umfasst die KWK-Anlage weiterhin eine zweite Bypass-Leitung, die dazu ausgebildet ist, das Arbeitsmedium an den Verdampfer vorbei zu der Expansionsmaschine zu leiten. Dieses kann für den Betrieb im Wärmepumpen-Modus, in dem das Arbeitsmedium durch die gegenüber dem Normalbetrieb umgekehrte Drehrichtung der Expansionsmaschine komprimiert wird, vorteilhaft sein.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können. Die Erfindung wird ausschließlich durch den Gegenstand der unabhängigen Ansprüche definiert.
Figur 1 stellt ein Bespiel für eine erfindungsgemäße KWK-Anlage dar, in der eine Bypass-Leitung vorgesehen ist, um zumindest einen Teil eines von einem Verdampfer gelieferten Arbeitsmediumsdampfes an einer Expansionsmaschine vorbei direkt einem Kondensator zum Übertragen von Wärme an ein Heizmedium zuzuführen.
Figur 2 zeigt ein weiteres Beispiel für eine erfindungsgemäße KWK-Anlage, in dem eine zusätzliche Bypass-Leitung zur Umgehung der Expansionsmaschine vorgesehen ist. In dem gezeigten Beispiel wird das Betreiben der Anlage im KWK-Betriebsmodus veranschaulicht.
Figur 3 zeigt ein weiteres Beispiel für eine erfindungsgemäße KWK-Anlage, in dem eine Bypass-Leitung zur Umgehung der Expansionsmaschine vorgesehen ist. In dem gezeigten Beispiel wird das Betreiben der Anlage im Heizbetriebs-Modus veranschaulicht.
Figur 4 zeigt ein weiteres Beispiel für eine erfindungsgemäße KWK-Anlage, in dem eine Bypass-Leitung zur Umgehung der Expansionsmaschine vorgesehen ist. In dem gezeigten Beispiel wird das Betreiben der Anlage im Wärmepumpen-Modus veranschaulicht.
Figur 5 zeigt ein weiteres Beispiel für eine erfindungsgemäße KWK-Anlage, in dem ein Kreislauf für ein Medium, das von einem Heizkessel zu einem Verdampfer geführt wird, um dort Wärme auf ein Arbeitsmedium zu übertragen, über Ventile in zwei Unterkreisläufe unterteilt wird.
Figur 6 veranschaulicht die thermische Leistung einer erfindungsgemäßen KWK-Anlage in Abhängigkeit von den unterschiedlichen Betriebsmodi.
Figur 7 zeigt eine Jahresdauerlinie für eine erfindungsgemäße KWK-Anlage.

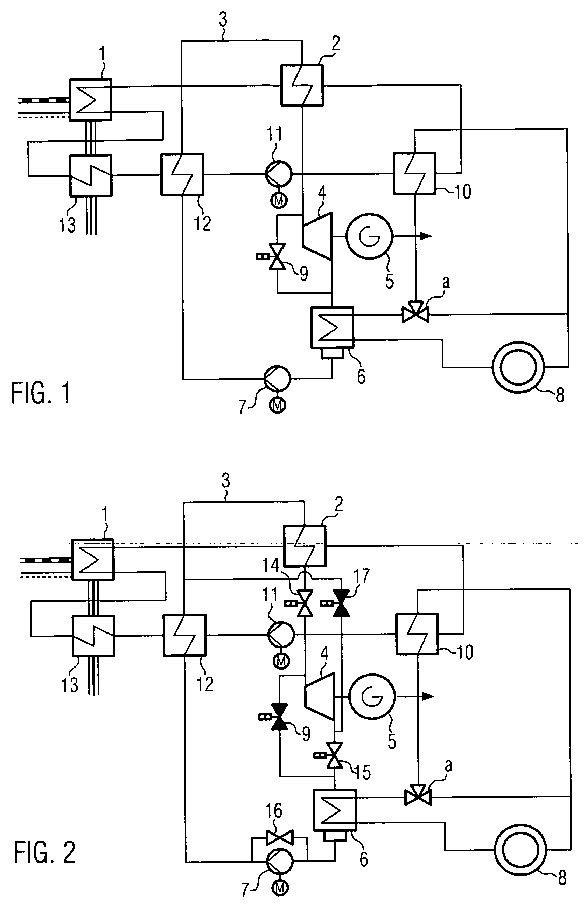

Ein erfindungsgemäßes Beispiel für eine KWK-Anlage ist in Figur 1 gezeigt. In dem gezeigten Beispiel ist ein Heizkessel 1 mit einem ORC zur Gewinnung von Strom und Wärme zu Heizzwecken gezeigt. In dem Heizkessel 1 wird Wasser erhitzt. Die Energie zur Aufheizung des Wassers wird zum Beispiel durch Verbrennen eines Brennstoffes, wie beispielsweise Kohle, Erdgas, Heizöl, Holz, Pellets, oder geothermisch oder solarthermisch gewonnen. Das Wasser wird in dem Heizkessel 1 zum Beispiel auf eine Temperatur von ungefähr 140 °C erhitzt. Das erhitzte Wasser wird einem Verdampfer 2 zugeführt. In dem Verdampfer wird ein organisches Arbeitsmedium des ORC verdampft. Als Arbeitsmedien kommen sämtliche in herkömmlichen ORC-Anlagen verwendeten "trockenen Medien", wie R245fa, "nasse" Medien, wie Ethanol oder "isentrope Medien", wie R134a, in Frage. Ebenso können synthetische Arbeitsmedien auf Silikonbasis, wie GL160, Verwendung finden.

In dem Verdampfer 2 wird einem organischen Arbeitsmedium des ORC 3 Wärme zugeführt. Beispielsweise wird das organische Arbeitsmedium vollständig in dem Verdampfer 2 verdampft. Der Arbeitsmediumsdampf wird über eine Druckleitung einer Expansionsmaschine 4 zugeführt. In der Expansionsmaschine 4 wird der Arbeitsmediumsdampf entspannt, und die Expansionsmaschine 4 treibt einen Generator 5 zur Gewinnung elektrischer Energie an. Der entspannte Arbeitsmediumsdampf wird in einem Kondensator 6 kondensiert und das verflüssigte Arbeitsmedium wird über eine Speisepumpe 7 dem Verdampfer 2 wieder zugeführt. Es kann auch ein Vorwärmer 12 vorgesehen werden (s. unten). In diesem Fall wird dem organischen Arbeitsmedium in dem Vorwärmer 12 Wärme zugeführt und das verflüssigte Arbeitsmedium über die Speisepumpe 7 zuerst dem Vorwärmer 12 und dann dem Verdampfer 2 wieder zugeführt.

Neben der Stromerzeugung wird Wärme zu Heizzwecken gewonnen. Dieses geschieht durch Abführen der am Kondensator 6 anfallenden Kondensationswärme an einen Heizkreis, beispielsweise einen Niedertemperatur-Heizkreis. In diesem Niedertemperatur-Heizkreis wird Wasser an dem Kondensator 6 erhitzt und einer Heizungsanlage 8 zugeführt, von wo es nach der durch die Heizung eines Gebäudes bedingte Abkühlung dem Kondensator 6 wieder zugeführt wird. Beispielsweise wird das Wasser dem Kondensator 6 mit einer Temperatur von ungefähr 30 °C zugeführt und wird durch den Kondensator 6 auf eine Temperatur von ungefähr 45 °C erhitzt. Wenn diese Temperatur und die übertragene Leistung für die Beheizung ausreichend ist, kann das Wasser durch das Ventil a direkt dem Heizkreis zugeleitet werden.

Die in der Figur 1 gezeigte beispielhafte KWK-Anlage weist erfindungsgemäß ein Bypass-Ventil 9 auf, das eine Bypass-Leitung zur Umgehung der Expansionsmaschine 4 regelt. Besteht eine gegenüber dem Normalbetrieb der KWK-Anlage erhöhte Wärmeleistungsanforderung für die Heizung eines Gebäudes bei niedrigen Außentemperaturen, kann über den Kondensator 6 zusätzlich Wärme an den Niedertemperatur-Heizkreis abgegeben werden, indem das Bypass-Ventil 9 zumindest teilweise geöffnet wird, so dass zumindest ein Teil des Arbeitsmediumsdampfes direkt, d.h. ohne Expansion an der Expansionsmaschine 4, dem Kondensator 6 zur Kondensation zugeführt wird. Da im allgemeinen ungefähr 10 % der im Heizkessel 1 erzeugten Wärme zur Stromgewinnung genutzt werden können, lässt sich also prinzipiell die thermische Leistung der KWK-Anlage durch vollständiges Öffnen des Bypass-Ventils 9 um ungefähr 10 % gegenüber dem Normalbetrieb erhöhen.

In dem in Figur 1 gezeigten Beispiel sind zur Steigerung der Gesamteffizienz der KWK-Anlage weitere Elemente vorgesehen. So sorgt ein über das Ventil a ganz oder teilweise durchströmbarer Nacherwärmer 10 für eine Nutzung der Wärme des von dem Verdampfer 2 strömenden Wassers des Heißwasser-Zwischenkreises, innerhalb dessen die zur Verdampfung des Arbeitsmediums des ORC erforderliche Wärme bereitgestellt wird, zur Heizung eines Gebäudes über den Niedertemperatur-Heizkreis. Das durch den Nacherwärmer 10 weiter abgekühlte Wasser des Heißwasser-Zwischenkreises wird über eine Pumpe 11 einem Vorwärmer 12 zugeführt, über den das von der Speisepumpe 7 geförderte organische Arbeitsmedium dem Verdampfer 2 zugeführt wird. Somit kann in einem Economizer 13 zusätzliche Wärme vom Rauchgas aufgenommen werden, das schließlich nach Abkühlung in dem Economizer 13 aus einem Kamin entweicht.

Alternativ kann der ORC ausgeschaltet werden und Wärme über den Nacherwärmer 10 von dem Heißwasser-Zwischenkreis an das Heizmediums des Heizkreises übertragen werden.

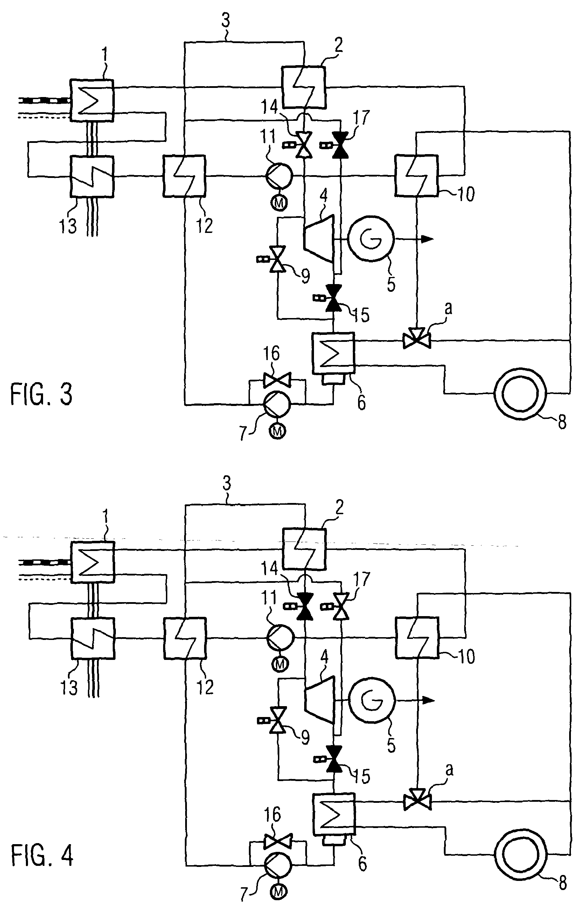

Ein weiteres Beispiel für eine erfindungsgemäße KWK-Anlage ist in den Figuren 2 und 3 gezeigt. Die in den Figuren 2 und 3 gezeigte KWK-Anlage umfasst sämtliche Merkmale der in Figur 1 gezeigten KWK-Anlage. Zusätzlich sind die drei Ventile 14, 15 und 16 vorgesehen und es wird eine Umleitung um den Verdampfer 2 durch ein weiteres Ventil 17 geregelt. Weiterhin ermöglicht Ventil 17 die Umkehrung der Strömungsrichtung durch die Expansionsmaschine und dadurch deren Betrieb als Kompressionsmaschine. Für die Ventile können beispielsweise Magnetventile Verwendung finden, Ventil 16 kann ein Drosselventil darstellen.

In Figur 2 sind die Ventile gemäß einem bestimmten KWK-Modus geregelt. Die schwarz gefüllt gezeigten Ventile sind hierbei geschlossene Ventile (siehe Ventile 9 und 17), während die Ventile mit in den Schaltsymbolen nicht gefüllten Dreiecksflächen geöffnete Ventile darstellen (siehe Ventile 14, 15 und 16). Beide Bypass-Leitungen sind durch die Ventile 9 und 17 geschlossen. Es wird ausreichend Wärme an dem Kondensator 6 erzeugt und an den Heizkreis zur Gebäudeheizung abgegeben.

Wenn eine Situation eintritt, in der eine erhöhte Heizleistung erforderlich ist, wird die KWK-Anlage, wie es in Figur 3 gezeigt ist, im reinen Heizbetrieb gefahren. Das Bypass-Ventil 9 wird geöffnet, so dass der Arbeitsmediumsdampf ohne Expansion durch die Expansionsmaschine 4 an dieser vorbei dem Kondensator 6 zur Kondensation zugeführt wird. Alternativ besteht auch die Möglichkeit, die Wärme des im Heizkessel 1 erhitzten Mediums im wesentlichen über den Nacherwärmer 10 auszutauschen, indem der ORC durch Ausschalten der Speisepumpe 7 stillgelegt wird. Wird kein Drosselventil für das Ventil 16 verwendet, kann insbesondere das Ventil 16 geöffnet werden, um den ORC durch Umgehen der Speisepumpe 7 auszuschalten. In diesen Fällen ist die Stellung den Ventils a derart, dass der Nacherwärmer 10 vollständig oder teilweise durchströmt wird. Es versteht sich, dass sich durch verschiedene Kombinationen teilweise oder vollständig geöffneter bzw. geschlossener Ventile verschiedene Nutzungsgrade hinsichtlich der Heizleistung realisieren lassen.

In Figur 4 ist der Betrieb der KWK-Anlage im Betriebsmodus einer Wärmepumpe gezeigt. Dieser Betrieb ermöglicht eine weitere Erhöhung der Heizleistung. Hierzu ist es notwendig, dass die Drehrichtung der Expansionsmaschine 4 gegenüber dem KWK-Modus umgekehrt werden kann. Dieses wird beispielsweise dadurch ermöglicht, dass die Expansionsmaschine 4 über einen Frequenzumrichter (zum Beispiel einen Vier-Quadranten-Frequenzumrichter) betrieben wird. Im Wärmepumpe-Modus wird somit das organische Arbeitsmedium komprimiert statt expandiert. In diesem Modus werden die Bypass-Leitungen durch die Ventile 9 und 17 geöffnet, und es wird die direkte Verbindung vom Verdampfer 2 zur Expansionsmaschine 4 und die direkte Verbindung von der Expansionsmaschine 4 zum Kondensator 6 über die Ventile 14 und 15 geschlossen. Der Vorwärmer 12 des KWK-Betriebs dient nunmehr als Verdampfer. Der dort gebildete Dampf wird durch die Expansionsmaschine 4, die nunmehr als Kompressionsmaschine dient, verdichtet. Im Economizer 13 findet eine sehr effiziente Abkühlung des Rauchgases statt, so dass der Wasserdampf im Rauchgas fast vollständig kondensiert wird und somit eine erhöhte Brennwertnutzung ermöglicht wird.

Gemäß einer Variante wird im Wärmepumpe-Modus wird die Leitung des Arbeitsmediums durch den Verdampfer 2 umgangen. Dieses kann beispielsweise durch das Vorsehen einer weiteren durch ein entsprechendes Ventil geregelte Bypass-Leitung, die den Verdampfer 2 umgeht und das Arbeitsmedium direkt der in diesem Modus komprimierend wirkenden Expansionsmaschine 4 zuführt, realisiert werden.

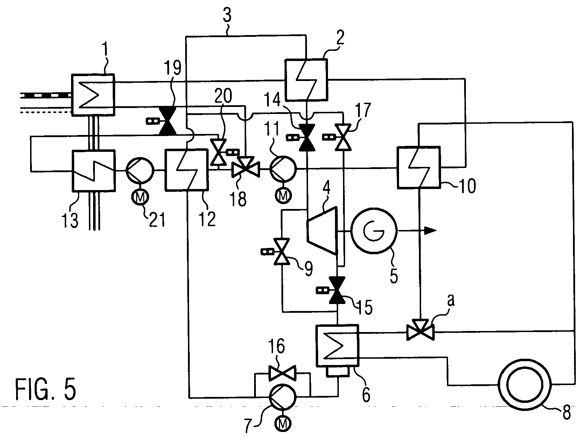

Gemäß einer weiteren in Figur 5 gezeigten Variante wird im Wärmepumpe-Modus der Heißwasser-Zwischenkreis in einen Kreis A, der direkt mit dem Heizkessel 1 verbunden ist, und einen Kreis B niederer Temperatur, der direkt mit dem Economizer 13 verbunden ist, über entsprechende Ventile 18, 19 und 20 aufgeteilt. Es findet so keine Vermischung der heißen und abgekühlten Wasserströme statt, wodurch im Kreis B niederer Temperatur eine geringere Temperatur vorliegt, als dass ohne Trennung in die Kreise A und B der Fall ist. Es kann noch eine Pumpe 21 zum Fördern des aus dem Vorwärmer 12 gelangenden Mediums zu dem Economizer 13 vorgesehen werden.

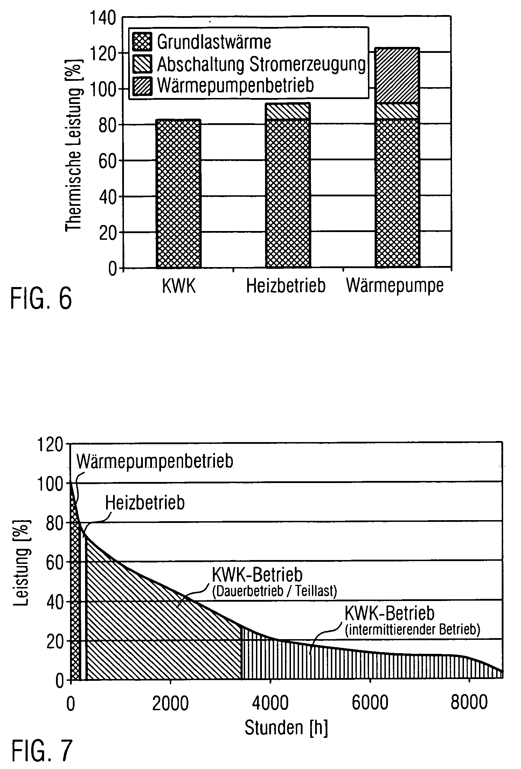

Die Wirksamkeit der erfindungsgemäßen KWK-Anlage gemäß obiger Beispiele wird in Figur 6 veranschaulicht. Wie gezeigt ist im Heizbetrieb-Modus die thermische Leistung bezogen auf den Heizwert des eingesetzten Brennstoffes um ungefähr 10 % gegenüber der thermischen Leistung im KWK-Modus erhöht. Im Betriebsmodus der Wärmepumpe resultiert eine Wärme- bzw. Heizleistungssteigerung um ungefähr 30 %.

In Figur 7 ist die Jahresdauerlinie für ein Beispiel einer erfindungsgemäßen KWK-Anlage gezeigt. Für eine kleine Anzahl an Tagen des Jahres (sehr kalte Wintertage) wird die KWK-Anlage im Wärmepumpe- oder Heizbetrieb-Modus gefahren. Während des Großteils des Jahres wird die KWK-Anlage im KWK-Modus gefahren. An Tagen, an denen die Minimalleistung unterschritten wird, erfolgt ein intermittierender KWK-Betriebsmodus.

Wie beschrieben kann durch die erfindungsgemäße Konstruktion einer KWK-Anlage, die den Betrieb im Heizbetrieb-Modus wie im Wärmepumpe-Modus ermöglicht, die ganzjährige zuverlässige Beheizung von Gebäuden ohne die Notwendigkeit für einen Spitzenlastkessel garantiert werden.

## Patentansprüche

1. Verfahren zum Betreiben einer Kraft-Wärme-Kopplungs, KWK, - Anlage, die einen Heizkessel (1), einen Verdampfer (2), eine Expansionsmaschine (4), die dazu ausgebildet ist, ein verdampftes Arbeitsmedium zu expandieren oder zu komprimieren, und einen Kondensator (6) umfasst, mit den Schritten
a) wenn eine erste Bedingung erfüllt ist: Zuführen eines Arbeitsmediums zu dem Verdampfer (2), um ein zumindest teilweise verdampftes Arbeitsmedium zu erhalten, Zuführen des verdampften Arbeitsmediums zu der Expansionsmaschine (4) und Betreiben der Expansionsmaschine (4) derart, dass das Arbeitsmedium expandiert wird, Zuführen des durch die Expansionsmaschine (4) expandierten Arbeitsmediums zu dem Kondensator (6) und Übertragen von Wärme des dem Kondensator (6) zugeführten expandierten Arbeitsmediums auf ein Medium eines Heizkreislaufes, der zum Beheizen eines Objekts ausgebildet ist; und
b) wenn eine zweite Bedingung, die von der ersten Bedingung verschieden ist, erfüllt ist: i) Zuführen zumindest eines Teiles eines Arbeitsmediums zu dem Kondensator (6) der KWK - Anlage, ohne dass der Teil des Arbeitsmediums der Expansionsmaschine (4) zugeführt wurde, und Übertragen von Wärme des dem Kondensator (6) zugeführten Arbeitsmediums auf ein Medium eines Heizkreislaufes, der zum Beheizen eines Objekts ausgebildet ist, und/oder ii) Zuführen eines von dem Heizkessel (1) zu dem Verdampfer (2) zugeführten Mediums zu einer Wärmeübertragungseinrichtung, in der Wärme von diesem Medium auf ein Medium eines Heizkreislaufes, der zum Beheizen eines Objekts ausgebildet ist, übertragen wird.

2. Das Verfahren gemäß Anspruch 1, weiterhin umfassend
c) wenn eine dritte Bedingung, die von der ersten und von der zweiten Bedingung verschieden ist, erfüllt ist: Zuführen eines Arbeitsmediums zu der Expansionsmaschine (4) und Betreiben der Expansionsmaschine (4) derart, dass das Arbeitsmedium komprimiert wird, Zuführen des durch die Expansionsmaschine (4) komprimierten Arbeitsmediums zu dem Kondensator (6) und Übertragen von Wärme des dem Kondensator (6) zugeführten komprimierten Arbeitsmediums auf ein Medium eines Heizkreislaufes, der zum Beheizen eines Objekts ausgebildet ist.

3. Das Verfahren gemäß Anspruch 1 oder 2, in dem die KWK-Anlage eine Organic Rankine Cycle - Anlage und das Arbeitsmedium ein organisches Arbeitsmedium ist.

4. Das Verfahren gemäß einem der vorhergehenden Ansprüche, in dem das in dem Kondensator (6) und/oder der Wärmeübertragungseinrichtung erwärmte Medium ein Medium eines Niedertemperatur-Kreislaufes, insbesondere mit einer maximalen Temperatur unterhalb von 50 °C ist.

5. Das Verfahren gemäß einem der vorhergehenden Ansprüche, in dem ein Medium von einem Heizkessel (1) dem Verdampfer (2) zugeführt wird, um das Arbeitsmedium zumindest teilweise zu verdampfen, und das Medium hernach durch einen Vorwärmer (12) geführt wird, durch den das Arbeitsmedium vor dem Zuführen zu dem Verdampfer (2) geführt wird, so dass das Medium in dem Vorwärmer (12) gekühlt und das Arbeitsmedium in dem Vorwärmer (12) erwärmt wird.

6. Das Verfahren gemäß einem der vorhergehenden Ansprüche, in dem ein Medium von einem Heizkessel (1) dem Verdampfer (2) zugeführt wird, um das Arbeitsmedium zumindest teilweise zu verdampfen, und das Medium hernach durch einen Economizer geführt wird, in dem auf das Medium Wärme eines zum Erhitzen des Heizkessels (1) verwendeten Brennstoffs übertragen wird.

7. Das Verfahren gemäß einem der vorhergehenden Ansprüche, in dem in Schritt a) auch Wärme an das Medium des Heizkreislaufs durch eine Nacherwärmeinrichtung (10) übertragen wird, durch die ein Medium strömt, das zuvor von einem Heizkessel (1) durch den Verdampfer (2) geleitetet wurde, um das Arbeitsmedium zumindest teilweise zu verdampfen.

8. Das Verfahren gemäß Anspruch 2, in dem in Schritt c) das Arbeitsmedium nicht durch den Verdampfer (2) geleitet wird.

9. Das Verfahren gemäß einem der vorhergehenden Ansprüche, in dem die erste Bedingung das Überschreiten einer ersten Außentemperaturschwelle des zu beheizenden Objekts umfasst, und/oder die zweite Bedingung das Unterschreiten einer zweiten Außentemperaturschwelle des zu beheizenden Objekts umfasst, wobei insbesondere die zweite Außentemperaturschwelle der ersten Außentemperaturschwelle gleich sein kann, und/oder die dritte Bedingung das Unterschreiten einer dritten Außentemperaturschwelle des zu beheizenden Objekts umfasst, wobei die dritte Außentemperaturschwelle niedriger als die zweite Außentemperaturschwelle ist.

10. Kraft-Wärme-Kopplungs, KWK, - Anlage, die umfasst
einen Verdampfer (2), der dazu ausgebildet ist, ein Arbeitsmedium zu verdampfen;
eine Expansionsmaschine (4), die dazu ausgebildet ist, das verdampfte Arbeitsmedium zu expandieren oder zu komprimieren;
einen Kondensator (6), der dazu ausgebildet ist, das expandierte oder komprimierte Arbeitsmedium zu kondensieren;
eine erste Bypass-Leitung mit einem ersten Ventil, die dazu ausgebildet ist, über das erste Ventil zumindest einen Teil des von dem Verdampfer (2) gelieferten verdampften Arbeitsmediums an der Expansionsmaschine (4) vorbei zu dem Kondensator (6) zu leiten;
eine Anzahl an Ventilen und eine Steuerungseinrichtung, die dazu ausgebildet ist,
a) wenn eine erste Bedingung erfüllt ist, die Anzahl an Ventilen derart zu steuern, dass das Arbeitsmedium dem Verdampfer (2) zugeführt wird, um ein zumindest teilweise verdampftes Arbeitsmedium zu erhalten, das gesamte verdampfte Arbeitsmedium der Expansionsmaschine (4) zuzuführen derart, dass das Arbeitsmedium expandiert wird, und das durch die Expansionsmaschine (4) expandierte verdampfte Arbeitsmedium dem Kondensator (6) zuzuführen, so dass Wärme des dem Kondensator (6) zugeführten expandierten Arbeitsmediums auf ein Medium eines Heizkreislaufes, der zum Beheizen eines Objekts ausgebildet ist, übertragen wird; und
b) wenn eine zweite Bedingung, die von der ersten Bedingung verschieden ist, erfüllt ist, die Anzahl an Ventilen derart zu steuern, dass i) zumindest ein Teil eines Arbeitsmediums zu dem Kondensator (6) der KWK - Anlage, ohne dass der Teil des Arbeitsmediums der Expansionsmaschine (4) zugeführt wurde, zugeführt wird und Wärme des dem Kondensator (6) zugeführten Arbeitsmediums auf ein Medium eines Heizkreislaufes, der zum Beheizen eines Objekts ausgebildet ist, übertragen wird und/oder ii) ein von dem Heizkessel (1) zu dem Verdampfer (2) zugeführtes Medium einer Wärmeübertragungseinrichtung zugeführt wird, so dass Wärme von diesem Medium auf ein Medium eines Heizkreislaufes, der zum Beheizen eines Objekts ausgebildet ist, übertragen wird.

11. Die KWK-Anlage gemäß Anspruch 10, weiterhin eine zweite Bypass-Leitung umfassend, die dazu ausgebildet ist, das Arbeitsmedium an den Verdampfer (2) vorbei zu der Expansionsmaschine (4) zu leiten.

12. Die KWK-Anlage gemäß Anspruch 10 oder 11, die einen Organic Rankine Cycle für das organische Arbeitsmedium umfasst.

13. Die KWK-Anlage gemäß Anspruch 11, wobei die Steuerungseinrichtung weiterhin dazu ausgebildet ist, wenn eine dritte Bedingung, die von der ersten und von der zweiten Bedingung verschieden ist, erfüllt ist,
die Anzahl an Ventilen derart zu steuern, dass ein Arbeitsmedium der Expansionsmaschine (4) zugeführt wird,
die Expansionsmaschine (4) derart zu betreiben, dass das Arbeitsmedium komprimiert wird, und
das durch die Expansionsmaschine (4) komprimierte Arbeitsmedium dem Kondensator (6) zuzuführen, so dass Wärme des dem Kondensator (6) zugeführten komprimierten Arbeitsmediums auf ein Medium eines Heizkreislaufes, der zum Beheizen eines Objekts ausgebildet ist, übertragen wird.

14. Die KWK-Anlage gemäß einem der Ansprüche 10 bis 13, in der die Expansionsmaschine (4) dazu ausgebildet ist, in einer ersten Drehrichtung zur Expansion des Arbeitsmediums und in einer zweiten Drehrichtung zur Kompression des Arbeitsmediums zu arbeiten.

## Claims

1. Method for operating a combined heat and power plant, CHP, comprising a heating boiler (1), a vaporizer (2), an expansion machine (4) configured for expanding or compressing an evaporated working medium, and a condenser (6), comprising the steps of
a) when a first condition is met: supplying a working medium to the vaporizer (2) to obtain an at least partially evaporated working medium, feeding the evaporated working medium to the expansion machine (4), and operating the expansion machine (4) such that the working medium is expanded, supplying the working medium expanded by the expansion machine (4) to the condenser (6), and transferring heat of the working medium supplied to the condenser (6) to a medium of a heating circuit configured to heat an object; and
b) when a second condition is met which is different from the first condition: i) supplying at least a portion of a working medium to the condenser (6) of the CHP plant without the portion of the working medium having been supplied to the expansion machine (4), and transferring heat of the working medium supplied to the condenser (6) to a medium of a heating circuit configured to heat an object, and/or ii) supplying a medium supplied from the heating boiler (1) to the vaporizer (2) to a heat transfer device in which heat is transferred from this medium to a medium of a heating circuit configured to heat an object.

2. Method according to claim 1, furthermore comprising
c) when a third condition is met which is different from the first and the second conditions: supplying a working medium to the expansion machine (4) and operating the expansion machine (4) such that the working medium is compressed, supplying the working medium compressed by the expansion machine (4) to the condenser (6), and transferring heat of the compressed working medium supplied to the condenser (6) to a medium of a heating circuit which is configured to heat an object.

3. Method according to claim 1 or 2, in which the CHP plant is an Organic Rankine Cycle plant, and the working medium is an organic working medium.

4. Method according to one of the preceding claims, in which the medium heated in the condenser (6) and/or in the heat transfer device is a medium of a low-temperature circuit, in particular having a maximum temperature of below 50 °C.

5. Method according to one of the preceding claims, in which a medium is supplied from a heating boiler (1) to the vaporizer (2) to at least partially evaporate the working medium, and the medium is subsequently guided through a preheater (12) through which the working medium is guided before being supplied to the vaporizer (2), such that the medium is cooled in the preheater (12) and the working medium is heated in the preheater (12).

6. Method according to one of the preceding claims, in which a medium is supplied from a heating boiler (1) to the vaporizer (2) to at least partially evaporate the working medium, and the medium is subsequently guided through an economizer in which heat of a fuel used for heating the heating boiler (1) is transferred to the medium.

7. Method according to one of the preceding claims, in which in step a), heat is also transferred to the medium of the heating circuit by a reheating device (10) through which a medium flows which was previously guided from a heating boiler (1) through the vaporizer (2) to at least partially evaporate the working medium.

8. Method according to one of claims 1 to 7, in which in step c), the working medium is not guided through the vaporizer (2).

9. Method according to one of the preceding claims, in which the first condition comprises exceeding a first outside temperature threshold of the object to be heated, and/or the second condition comprises falling below a second outside temperature threshold of the object to be heated, wherein in particular the second outside temperature threshold may be identical to the first outside temperature threshold, and/or the third condition comprises falling below a third outside temperature threshold of the object to be heated, wherein the third outside temperature threshold is lower than the second outside temperature threshold.

10. Combined heat and power, CHP, plant, comprising
a vaporizer (2) configured to evaporate a working medium;
an expansion machine (4) configured to expand or compress the evaporated working medium;
a condenser (6) configured to condense the expanded or compressed working medium; a first bypass line with a first valve configured to supply, via the first valve, at least a portion of the evaporated working medium supplied by the vaporizer (2) past the expansion machine (4) to the condenser (6);
a number of valves and a control device, configured to
a) when a first condition is met, control the number of valves such that the working medium is supplied to the vaporizer (2) to obtain an at least partially evaporated working medium, supply the total evaporated working medium to the expansion machine (4) such that the working medium is expanded, and supply the evaporated working medium expanded through the expansion machine (4) to the condenser (6), such that heat of the expanded working medium supplied to the condenser (6) is transferred to a medium of a heating circuit which is configured to heat an object; and
b) when a second condition is met which is different from the first condition, control the number of valves such that i) at least a portion of a working medium is supplied to the condenser (6) of the CHP plant without the portion of the working medium having been supplied to the expansion machine (4), and heat of the working medium supplied to the condenser (6) is transferred to a medium of a heating circuit which is configured to heat an object, and/or ii) a medium supplied from the heating boiler (1) to the vaporizer (2) is supplied to a heat transfer device, such that heat is transferred from this medium to a medium of a heating circuit, which is configured to heat an object.

11. CHP plant according to claim 10, furthermore comprising a second bypass line which is configured to guide the working medium past the vaporizer (2) to the expansion machine (4).

12. CHP plant according to claim 10 or 11, comprising an Organic Rankine Cycle for the organic working medium.

13. CHP plant according to claim 11, wherein the control device, when a third condition is met which is different from the first and from the second conditions, is furthermore configured to
control the number of valves such that a working medium is supplied to the expansion machine (4),
operate the expansion machine (4) such that the working medium is compressed, and
supply the working medium compressed by the expansion machine (4) to the condenser (6), such that heat of the compressed working medium supplied to the condenser (6) is transferred to a medium of a heating circuit which is configured to heat an object.

14. CHP plant according to one of claims 10 to 13, in which the expansion machine (4) is configured to operate in a first sense of rotation for the expansion of the working medium, and in a second sense of rotation for the compression of the working medium.

## Revendications

1. Procédé d'utilisation d'une installation de cogénération KWK, soit Kraft-Wärme-Kopplung, comprenant une chaudière (1), un évaporateur (2), une machine à expansion (4) conçue pour détendre ou comprimer un fluide de travail évaporé, et un condensateur (6), comprenant les étapes suivantes :
a) quand une première condition est remplie : alimentation d'un fluide de travail à l'évaporateur (2) pour obtenir un fluide de travail au moins partiellement évaporé, alimentation du fluide de travail évaporé à la machine à expansion (4) et actionnement de la machine à expansion (4) de manière à détendre le fluide de travail, alimentation du fluide de travail détendu par la machine à expansion (4) au condensateur (6), et transfert de chaleur du fluide de travail détendu alimenté au condensateur (6) vers un fluide d'un circuit de chauffage conçu pour le chauffage d'un objet ; et
b) quand une deuxième condition différente de la première condition est remplie : i) alimentation d'au moins une partie d'un fluide de travail au condensateur (6) de l'installation de cogénération KWK sans que ladite partie du fluide de travail ne soit alimentée à la machine à expansion (4), et transfert de chaleur du fluide de travail alimenté au condensateur (6) vers un fluide d'un circuit de chauffage conçu pour le chauffage d'un objet, et/ou ii) alimentation d'un fluide alimenté de la chaudière (1) à l'évaporateur (2) vers un dispositif de transfert de chaleur, dans lequel la chaleur dudit fluide est transférée à un fluide d'un circuit de chauffage conçu pour le chauffage d'un objet.

2. Procédé selon revendication 1, comprenant en outre
c) quand une troisième condition différente des première et deuxième conditions est remplie : l'alimentation d'un fluide de travail à la machine à expansion (4) et l'actionnement de la machine à expansion (4) de manière à comprimer le fluide de travail, l'alimentation du fluide de travail comprimé par la machine à expansion (4) au condensateur (6), et le transfert de chaleur du fluide de travail comprimé alimenté au condensateur (6) vers un fluide d'un circuit de chauffage conçu pour le chauffage d'un objet.

3. Procédé selon revendication 1 ou 2, dans lequel l'installation de cogénération KWK est une installation à cycle organique de Rankine et le fluide de travail est un fluide de travail organique.

4. Procédé selon l'une des revendications précédentes, dans lequel le fluide réchauffé dans le condensateur (6) et/ou dans le dispositif de transfert de chaleur est un fluide d'un circuit basse température, en particulier d'un circuit dont la température maximale est inférieure à 50 °C.

5. Procédé selon l'une des revendications précédentes, dans lequel un fluide est alimenté d'une chaudière (1) à l'évaporateur (2) pour évaporer au moins partiellement le fluide de travail, et le fluide est ensuite alimenté par un dispositif de préchauffage (12), à travers lequel le fluide de travail est circulé pour alimenter l'évaporateur (2), de telle sorte que le fluide soit refroidi dans le dispositif de préchauffage (12) et que le fluide de travail soit réchauffé dans le dispositif de préchauffage (12).

6. Procédé selon l'une des revendications précédentes, dans lequel un fluide est alimenté par une chaudière (1) à l'évaporateur (2) pour évaporer au moins partiellement le fluide de travail, et le fluide est ensuite alimenté à travers un économiseur, dans lequel de la chaleur d'un combustible utilisé pour chauffer la chaudière (1) est transférée au fluide.

7. Procédé selon l'une des revendications précédentes, dans lequel, à l'étape a), de la chaleur est également transférée au fluide du circuit de chauffage par un dispositif de réchauffage (10), à travers lequel s'écoule un fluide qui est envoyé auparavant depuis une chaudière (1) à travers l'évaporateur (2) pour évaporer au moins partiellement le fluide de travail.

8. Procédé selon revendication 2, dans lequel, à l'étape c), le fluide de travail n'est pas envoyé à travers l'évaporateur (2).

9. Procédé selon l'une des revendications précédentes, dans lequel la première condition comporte le dépassement d'un premier seuil de température extérieure de l'objet à réchauffer, et/ou la deuxième condition comporte le sous-dépassement d'un deuxième seuil de température extérieure de l'objet à réchauffer, dans lequel le deuxième seuil de température extérieure peut en particulier être égal au premier seuil de température extérieure, et/ou la troisième condition comporte le sous-dépassement d'un troisième seuil de température extérieure de l'objet à réchauffer, dans lequel le troisième seuil de température extérieure est inférieur au deuxième seuil de température extérieure.

10. Installation de cogénération KWK, comprenant un évaporateur (2) conçu pour évaporer un fluide de travail ;
une machine à expansion (4) conçue pour détendre ou pour comprimer le fluide de travail évaporé ;
un condensateur (6) conçu pour condenser le fluide de travail détendu ou comprimé ;
une première conduite de dérivation comportant une première vanne conçue pour alimenter au moins une partie du fluide de travail évaporé, alimentée par l'évaporateur (2) via la première vanne, à la machine à expansion (4) en évitant le condensateur (6) ;
une pluralité de vannes et un dispositif de commande conçu pour
a) quand une première condition est remplie, commander la pluralité de vannes de telle sorte que le fluide de travail soit alimenté à l'évaporateur (2) pour obtenir un fluide de travail au moins partiellement évaporé, envoyer tout le fluide de travail évaporé à la machine à expansion (4) de telle sorte que le fluide de travail soit détendu, et envoyer le fluide de travail évaporé détendu par la machine à expansion (4) au condensateur (6) de telle sorte que la chaleur du fluide de travail détendu alimenté au condensateur (6) soit transférée à un fluide d'un circuit de chauffage conçu pour le chauffage d'un objet ; et
b) quand une deuxième condition différente de la première condition est remplie, commander la pluralité de vannes de telle sorte i) qu'au moins une partie d'un fluide de travail soit alimentée au condensateur (6) de l'installation de cogénération KWK sans que ladite partie du fluide de travail ne soit alimentée à la machine à expansion (4), et que de la chaleur du fluide de travail alimenté au condensateur (6) soit transférée à un fluide d'un circuit de chauffage conçu pour le chauffage d'un objet, et/ou ii) qu'un fluide alimenté de la chaudière (1) à l'évaporateur (2) soit alimentée à un dispositif de transfert de chaleur, de telle sorte que de la chaleur soit transférée dudit fluide à un fluide d'un circuit de chauffage conçu pour le chauffage d'un objet.

11. Installation de cogénération KWK selon la revendication 10, comprenant en outre une deuxième conduite de dérivation conçue pour conduire le fluide de travail à l'évaporateur (2) en évitant la machine à expansion (4).

12. Installation de cogénération KWK selon la revendication 10 ou 11, comprenant un cycle organique de Rankine pour le fluide de travail organique.

13. Installation de cogénération KWK selon la revendication 11, dans laquelle, quand une troisième condition différente des première et deuxième conditions est remplie, le dispositif de commande est en outre conçu pour:
commander la pluralité de vannes de telle sorte qu'un fluide de travail soit alimenté à la machine à expansion (4),
commander la machine à expansion (4) de telle sorte que le fluide de travail soit comprimé, et
alimenter le fluide de travail comprimé par la machine à expansion (4) au condensateur (6) de telle sorte que de la chaleur du fluide de travail comprimé alimenté au condensateur (6) soit transférée à un fluide d'un circuit de chauffage conçu pour le chauffage d'un objet.

14. Installation de cogénération KWK selon l'une des revendications 10 à 13, dans laquelle la machine à expansion (4) est conçue pour effectuer l'expansion du fluide de travail dans un premier sens de rotation et pour effectuer la compression du fluide de travail dans un deuxième sens de rotation.
